# EUROPÄISCHE PATENTANMELDUNG

(11) **EP 4 802 950 A1**
(43) Veröffentlichungstag der Anmeldung: **09.09.2026**
(21) Anmeldenummer: 26162786.3
(22) Anmeldetag: 06.03.2026
(51) Int. Cl.: A47B 45/00, A47B 47/00, F16B 12/40, A47B 47/02, F16B 12/38, A47B 57/12

(54) **MODULARE, MEHRFACH MONTIERBARE UND DEMONTIERBARE RAHMENKONSTRUKTON**

(30) Priorität: 06.03.2025 CH 2232025
(71) Anmelder: Duco System AG, 8157 Dielsdorf (CH)
(72) Erfinder: STRENG, Esther, 8008 Zürich (CH)
(74) Vertreter: Frei Patent Attorneys

(57) **Zusammenfassung**

Die vorliegende Erfindung betrifft eine modulare, mehrfach montierbare und demontierbare Rahmenkonstruktion. Sie umfasst als erster Bestandteil ein vorgefertigtes rohrförmiges Leitergestell 1. An den jeweils gewünschten Verbindungsstellen 3 der Stangen 2 sind ein oder zwei entweder starre Kupplungsteile 4 oder Kupplungsteile mit einem elastischen Teil 5 fest montiert. Die Rahmenkonstruktion umfasst als zweiter Bestandteil rohrförmige Verbindungselemente 6, die an ihren beiden Enden inwendige Kupplungsteile aufweisen, die entweder mit einem elastischen Teil 5 ausgerüstet oder als starre Kupplungsteile 4 ausgebildet sind. Die starren Kupplungsteile 4 und die Kupplungsteile mit einem elastischen Teil 5 sind derart aufeinander abgestimmt, dass sie verriegelbar und entriegelbar sind. Die Entriegelung erfolgt durch Einwirkung eines von aussen applizierten Stiftes durch die Öffnungen 7 in den rohrförmigen Verbindungselementen 6.

## Beschreibung

### Gebiet der Erfindung

Die vorliegende Erfindung betrifft eine modulare, mehrfach montierbare und demontierbare Rahmenkonstruktion.

### Stand der Technik

In EP 0 400 345 B1 sind Verbindungselemente und darauf basierende Gestellsysteme beschrieben. Dabei werden in rohrförmige Streben keilförmige Hülsen oder Keile eingeführt. Diese werden mittels einer Spannschraube gegeneinander gezogen, verkeilen sich dadurch mit den Streben und erzeugen dadurch eine kraftschlüssige Verbindung mit einem Eckelement oder mit einem innen liegenden Element. Die zahlreichen Einzelteile der Verbindungselemente sind nur in aufwändiger Weise herstellbar und benötigen zur Montage spezielle Werkzeuge. Die sich in den Eckelementen oder in den innen liegenden Elementen befindlichen Öffnungen sind immer sichtbar und sind ästhetisch unschön.

In EP 1 615 528 B1 werden ebenfalls Verbindungselemente und darauf basierende Gestellsysteme beschrieben. Das Verbindungselement zur Verbindung von rohrförmigen Streben weist von einem Zentralelement ausgehende Kupplungselemente auf, deren Längsachsen in einer gemeinsamen Ebene liegen. Die Kupplungselemente für die Anordnung in der Horizontalen weisen eine rotationszylindrische Grundform auf und haben mindestens eine Kupplungsausnehmung. Die Kupplungselemente werden mit den Streben mittels eines Bajonettverschlusses miteinander verbunden und verdreht. Die so erzeugte Verbindung wird mit einer Madenschraube fixiert.

Für die Entriegelung wird die Madenschraube gelöst und der Bajonettverschluss wird wieder aufgedreht.

Eine rohrförmige Strebe für die Anordnung in der Vertikalen wird durch die Lochplatte im Zentralelement entweder mit einem Fuss oder mit einer weiteren rohrförmigen Strebe für die Anordnung in der Vertikalen verschraubt.

Die Montage der einzelnen Teile benötigt viel Zeit und es besteht die Gefahr, dass Teile fehlerhaft eingeschraubt werden. Es kann vorkommen, dass die Schrauben entweder zu stark oder zu schwach angezogen werden.

In EP 1 444 912 A1 ist eine lösbare Schnappverbindung zwischen einem elastischen und einem starren Teil beschrieben. Dabei weist das Rastelement entlang seines Schaftes eine verschiebbar gelagerte Hülse zum Lösen der Schnappverbindung auf. Für diese Art einer lösbaren Verbindung wird die Bezeichnung "push to open" verwendet.

In DE 20 2008 013 810 U1 wird ein zusammensetzbares Regal beschrieben. Dabei werden Standgestelle und querlaufende Stangeneinheiten mittels Gewindestangen und mittels Anschlusselementen miteinander verschraubt.

Auch hier benötigt die Montage der einzelnen Teile viel Zeit und es besteht die Gefahr, dass Teile fehlerhaft eingeschraubt werden. Es kann vorkommen, dass die Schrauben entweder zu stark oder zu schwach angezogen werden.

### Darstellung der Erfindung

Es ist ein Ziel der vorliegenden Erfindung, eine modulare, mehrfach montierbare und demontierbare Rahmenkonstruktion zur Verfügung zu stellen.

Mit dieser Rahmenkonstruktion sollen die oben genannten Nachteile behoben werden.

Diese Rahmenkonstruktion soll so konzipiert sein, dass eine einfache Verbindung zwischen den einzelnen Verbindungsteilen ermöglicht wird. Dabei soll eine fehlerhafte Montage ausgeschlossen sein.

Diese Rahmenkonstruktion soll stabil und mit einfach anwendbaren Werkzeugen montierbar und demontierbar sein.

Die verschiedenen Einzelteile sollen einfach, schnell, passgenau und kostengünstig herstellbar sein.

Die verschiedenen Einzelteile sollen einfach lagerbar sein.

Mit der vorliegenden Erfindung werden diese Ziele erreicht.

Die erfindungsgemässe modulare, mehrfach montierbare und demontierbare Rahmenkonstruktion,
**ist dadurch gekennzeichnet, dass**
sie als erster Bestandteil
ein vorgefertigtes rohrförmiges Leitergestell 1 mit der jeweils gewünschten Anzahl und den jeweils gewünschten Längen von fest miteinander verbundenen Stangen 2 umfasst, wobei an den jeweils gewünschten Verbindungsstellen 3 der Stangen 2 ein oder zwei
entweder starre Kupplungsteile 4 oder Kupplungsteile mit einem elastischen Teil 5 fest montiert sind,
wobei diese Kupplungsteile 4,5 in einem Winkel von 90° zu den Längsachsen der fest miteinander verbundenen Stangen 2 angeordnet sind, und
wobei bei nur einem entweder starren Kupplungsteil 4 oder einem Kupplungsteil mit einem elastischen Teil 5 diese Kupplungsteile 4,5 auf die gleiche Seite des Leitergestells 1 gerichtet sind, und
als zweiter Bestandteil
rohrförmige Verbindungselemente 6 mit den jeweils gewünschten Längen umfasst, die an ihren beiden Enden inwendige Kupplungsteile aufweisen, die entweder mit einem elastischen Teil 5 ausgerüstet oder als starre Kupplungsteile 4 ausgebildet sind,
jedes rohrförmige Verbindungselement 6 an beiden Endbereichen in der Aussenwand je eine in einer Linie angeordnete Öffnung 7 aufweist, durch welche der elastische Teil 5 sichtbar ist, wobei die genannte Linie parallel zur Längsachse des rohrförmigen Verbindungselementes 6 verläuft, und wobei die genannte Linie und die genannte Längsachse in einer planaren Ebene liegen, und
wobei die starren Kupplungsteile 4 und die Kupplungsteile mit einem elastischen Teil 5 derart aufeinander abgestimmt sind, dass sie verriegelbar und entriegelbar sind.

Bevorzugte Ausführungsformen dieser Erfindung sind in den abhängigen Ansprüchen definiert.

Die erfindungsgemässe Rahmenkonstruktion kann zur Herstellung von Möbeln, insbesondere von Regalen, Büchergestellen, Schränken und Kästen, verwendet werden.

### Kurze Beschreibung der Zeichnungen

Im folgenden Teil werden mögliche Ausführungsformen der vorliegenden Erfindung beschrieben.

Dabei wird auch Bezug auf die Figuren genommen, die alle rein schematischen Charakter haben.

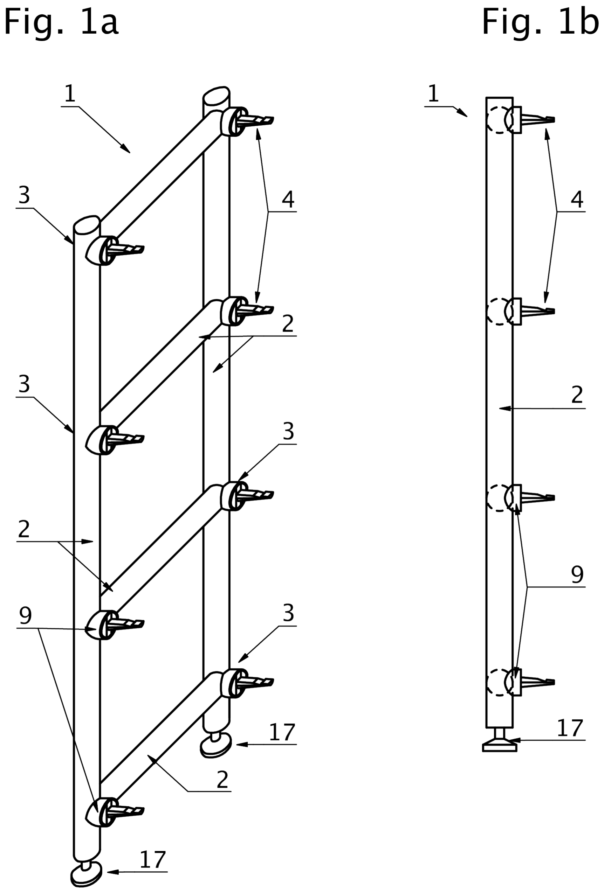

Figur 1a zeigt eine perspektivische Ansicht von schräg oben eines vorgefertigten rohrförmigen Leitergestells 1 für die Anordnung am Anfang oder am Ende einer Rahmenkonstruktion, wobei an den Verbindungsstellen 3 der Stangen 2 je ein starres Kupplungsteil 4 fest montiert ist, und wobei alle starren Kupplungsteile 4 auf die gleiche Seite des Leitergestells 1 gerichtet sind.
Figur 1b zeigt die Seitenansicht des in Figur 1a gezeigten Leitergestells 1.

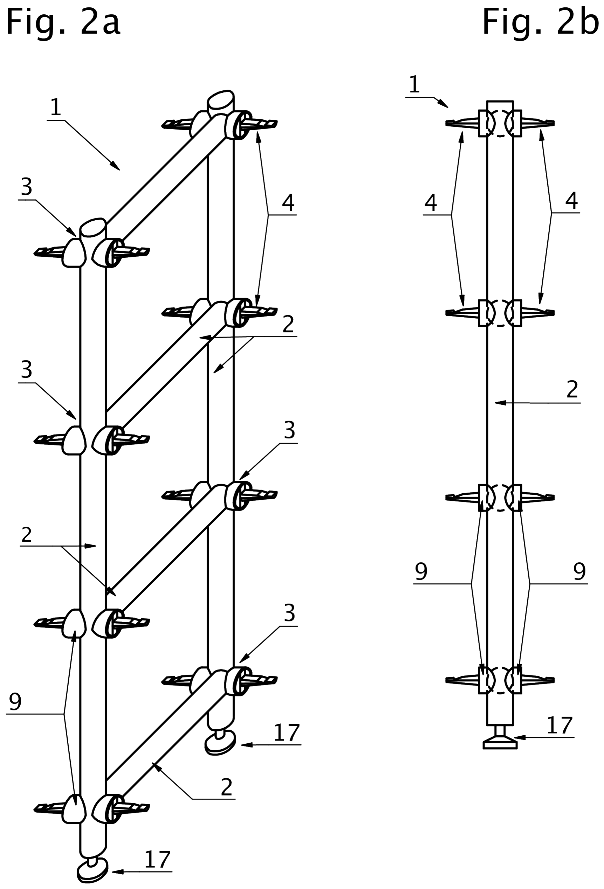

Figur 2a zeigt eine perspektivische Ansicht von schräg oben eines vorgefertigten rohrförmigen Leitergestells 1 für die Anordnung zwischen dem Anfang und dem Ende einer Rahmenkonstruktion, wobei an den Verbindungsstellen 3 der Stangen 2 zwei starre Kupplungsteile 4 fest montiert sind.
Figur 2b zeigt die Seitenansicht des in Figur 2a gezeigten Leitergestells 1.

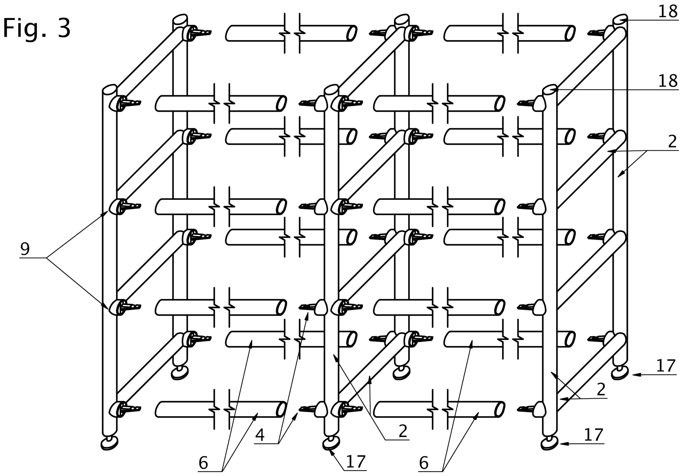

Figur 3 zeigt in Explosionsform eine perspektivische Ansicht von schräg oben einer Ausführungsform einer Rahmenkonstruktion mit zwei Elementen in der Länge und drei Elementen in der Höhe.

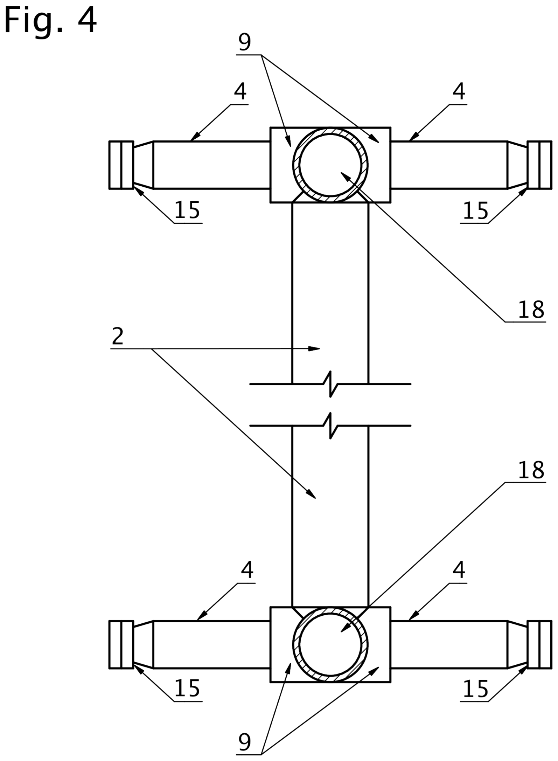

Figur 4 zeigt in der Draufsicht ein vorgefertigtes rohrförmiges Leitergestell 1 für die Anordnung zwischen dem Anfang und dem Ende einer Rahmenkonstruktion, wobei an den Verbindungsstellen 3 der Stangen 2 zylinderförmige Hohlkörper 9 fest montiert sind.

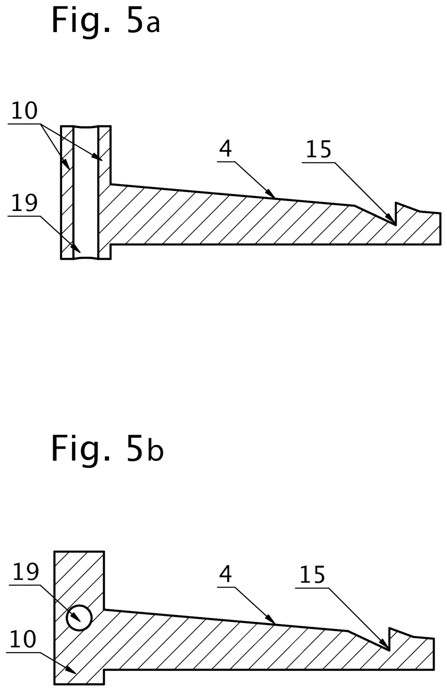

Figur 5a zeigt einen Querschnitt durch eine erste Ausführungsform eines starren Kupplungsteils 4.
Figur 5b zeigt einen Querschnitt durch eine zweite Ausführungsform eines starren Kupplungsteils 4.

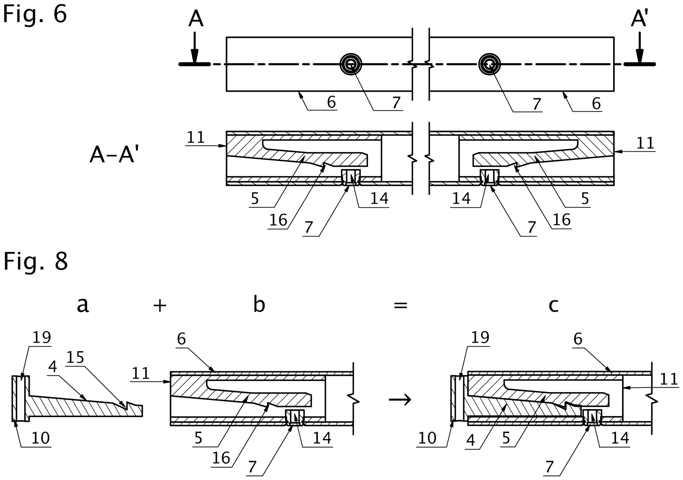

Figur 6 zeigt einen Längsschnitt durch die beiden Endbereiche eines rohrförmigen Verbindungselementes 6, wobei die Kupplungsteile mit einem elastischen Teil 5 als Insert 11 ausgebildet sind.

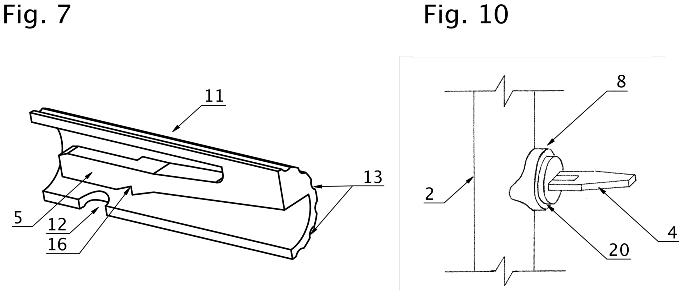

Figur 7 zeigt von schräg oben die perspektivische Ansicht eines Längsschnittes durch ein in Figur 6 dargestelltes Insert 11.
Figur 8 zeigt im Längsschnitt schematisch den Montageschritt eines starren Kupplungsteils 4 mit dem Kupplungsteil mit einem elastischen Teil 5 im rohrförmigen Verbindungselement 6.

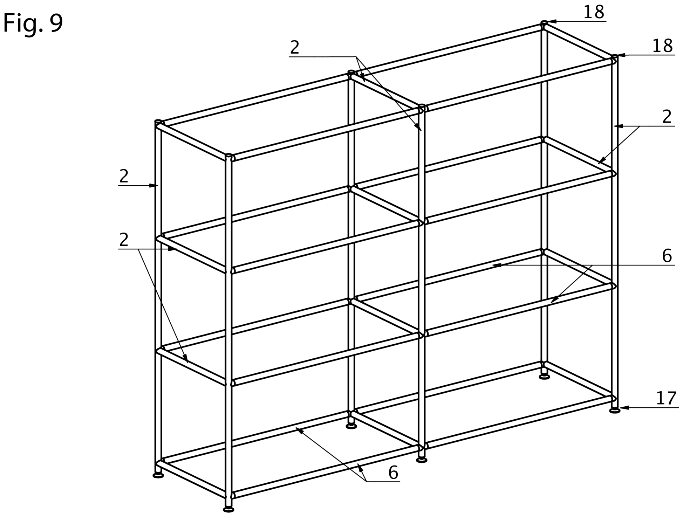

Figur 9 zeigt von schräg oben eine Seitenansicht einer montierten Rahmenkonstruktion mit zwei Elementen in der Länge und drei Elementen in der Höhe.
Figur 10 zeigt von schräg oben eine Seitenansicht einer möglichen Ausführungsform eines zusätzlichen Verbindungselementes 8 mit einem fest montierten starren Kupplungsteil 4.

### Mögliche Ausführungsformen der Erfindung

Die nachfolgend angegebenen Masse sind als Richtwerte von einem Prototyp zu verstehen und müssen für die Praxis noch angepasst und verifiziert werden.

Die modulare, mehrfach montierbare und demontierbare Rahmenkonstruktion umfasst als erster Bestandteil ein vorgefertigtes rohrförmiges Leitergestell 1. Dieses Leitergestell 1 kann zwei in der Vertikalen angeordnete 120 cm lange rohrförmige Stangen 2 umfassen. Zwischen diese Stangen 2 können im Abstand von 40 cm vier rohrförmige Stangen 2 in der Horizontalen angeschweisst sein. Am unteren Ende jeder 120 cm langen Stange 2 kann ein aus einem Kunststoff hergestelltes Verbindungsteil mit einem inwendigen Gewinde und einer Arretierung eingepresst sein, in das ein Fussteil 17 aus Kunststoff oder aus einem Metall eingeschraubt werden kann. Am oberen Ende jeder 120 cm langen rohrförmigen Stange 2 kann eine Abschlusskappe 18 eingepresst sein. Die rohrförmigen Stangen 2 haben einen runden Querschnitt, der Aussendurchmesser beträgt 19 mm und die Wandstärke beträgt 1 mm.

Jedes Leitergestell 1 für die Anordnung am Anfang oder am Ende einer Rahmenkonstruktion weist an den Verbindungsstellen 3 der Stangen 2 ein fest montiertes entweder starres Kupplungsteil 4 oder ein Kupplungsteil mit einem elastischen Teil 5 auf.

Diese Kupplungsteile 4,5 sind auf die gleiche Seite des Leitergestells 1 gerichtet.

Jedes Leitergestell 1 für die Anordnung zwischen dem Anfang und dem Ende einer Rahmenkonstruktion weist an den Verbindungsstellen 3 der Stangen 2 zwei fest montierte entweder starre Kupplungsteile 4 oder Kupplungsteile mit einem elastischen Teil 5 auf.

Die entweder starren Kupplungsteile 4 oder die Kupplungsteile mit einem elastischen Teil 5 sind in einem Winkel von 90° zu den Längsachsen der fest miteinander verbundenen Stangen 2 angeordnet.

Die modulare, mehrfach montierbare und demontierbare Rahmenkonstruktion umfasst als zweiter Bestandteil rohrförmige Verbindungselemente 6 mit den jeweils gewünschten Längen, beispielsweise Längen von 40 cm oder 80 cm, die an ihren beiden Enden inwendige Kupplungsteile aufweisen, die entweder mit einem elastischen Teil 5 ausgerüstet oder als starre Kupplungsteile 4 ausgebildet sind.

Die rohrförmigen Verbindungselemente 6 haben einen runden Querschnitt, der Aussendurchmesser beträgt 19 mm und die Wandstärke beträgt 1 mm.

Jedes rohrförmige Verbindungselement 6 weist an beiden Endbereichen in der Aussenwand je eine in einer Linie angeordnete Öffnung 7 auf, durch welche der elastische Teil 5 sichtbar ist, wobei die genannte Linie parallel zur Längsachse des rohrförmigen Verbindungselementes 6 verläuft, und wobei die genannte Linie und die genannte Längsachse in einer planaren Ebene liegen.

Die rohrförmigen Verbindungselemente 6 können aus Stahl, vorzugsweise Chromstahl, hergestellt sein.

Alle genannten Kupplungsteile 4,5 sind aufeinander abgestimmt, verriegelbar und entriegelbar.

Es ist bevorzugt, dass an den Verbindungsstellen 3 der Stangen 2 die starren Kupplungsteile 4 fest montiert sind.

Die starren Kupplungsteile 4 können aus einem Kunststoff hergestellt sein.

Als Folge davon weisen die inwendigen Kupplungsteile in den rohrförmigen Verbindungselementen 6 einen elastischen Teil 5 auf.

Bei dieser Ausführungsform verlaufen die starren Kupplungsteile 4 in Richtung der dem Leitergestell 1 abgewandten Seite über eine Distanz von 40,2 mm verjüngend von anfänglich 6,9 mm auf 4,0 mm.

Die starren Kupplungsteile 4 weisen an ihren Enden eine angeschrägte und taillierte Kerbe 15 auf.

Bei der Montage gleitet über diese angeschrägte und taillierte Kerbe 15 der elastische Kupplungsteil 5 und rastet dann ein.

Bei dieser Ausführungsform sind die inwendigen Kupplungsteile mit einem elastischen Teil 5 vorzugsweise als Insert 11 ausgebildet. Die aus einem Kunststoff hergestellten Inserts 11 haben eine Länge von 54,3 mm, einen Innendurchmesser von 12,75 mm und eine Wandstärke von 1,9 mm. Sie weisen an ihrer Aussenseite eine auf die Öffnung 7 im rohrförmigen Verbindungselement 6 abgestimmte Öffnung 12 auf, durch welche der elastische Teil 5 sichtbar ist. Die Inserts 11 weisen entlang ihrer Längsachse an ihrer Aussenseite vorzugsweise Rippen 13 auf.

Die Inserts 11 sind in die rohrförmigen Verbindungselemente 6 eingepresst und können zusätzlich verklebt sein. Die Inserts 11 können an dem Ende, mit welchem sie in die rohrförmigen Verbindungselemente 6 eingepresst werden, angeschrägt sein.

Durch die Öffnung 7 im rohrförmigen Verbindungselement 6 und durch die Öffnung 12 im Insert 11, durch welche der elastische Teil 5 sichtbar ist, können die aufeinander abgestimmten, entriegelbaren Kupplungsteile 4,5 durch Einwirkung eines von aussen applizierten Stiftes entriegelt werden.

Es ist auch möglich, dass in die Öffnungen 7 in den rohrförmigen Verbindungselementen 6 und in die Öffnungen 12 im Insert 11, durch welche der elastische Teil 5 sichtbar ist, eine Hohlniete 14 eingepresst ist.

Diese Hohlniete 14 dient einerseits der Fixierung des Inserts 11 gegenüber einer Verdrehung und andererseits können durch die Öffnung in der Hohlniete 14 die aufeinander abgestimmten, entriegelbaren Kupplungsteile 4,5 durch Einwirkung eines von aussen applizierten Stiftes entriegelt werden.

Bei einer fertig montierten Rahmenkonstruktion sollen die Öffnungen 7 in der Aussenwand der rohrförmigen Verbindungselemente 6 aus ästhetischen Gründen nicht auffallen.

Es ist bevorzugt, dass die Öffnungen 7 in der Aussenwand der rohrförmigen Verbindungselemente 6 in montierter Form entweder nach innen oder nach unten gerichtet sind.

Je nach gewünschter Ausrichtung dieser Öffnungen 7 in einer fertig montierten Rahmenkonstruktion müssen die starren Kupplungsteile 4 entsprechend ausgerichtet sein.

Der elastische Teil 5 in den als Insert 11 ausgebildeten Kupplungsteilen ist an einem Ende über eine Länge von 12,5 mm und über den ganzen Innendurchmesser des Inserts 11 starr an das Insert 11 fixiert und verläuft in Richtung des anderen Endes ansteigend und frei abstehend zur Innenwand des Inserts 11.

Dieser abstehende Teil hat eine Länge von 36,6 mm. Im Abstand von 15,0 mm vom freien Ende des elastischen Teils 5 ist eine angeschrägte Kerbe 16 vorhanden, die auf die Kerbe 15 im starren Kupplungsteil 4 abgestimmt ist.

Die Inserts 11 können im Spritzgussverfahren hergestellt werden.

Es ist auch möglich, dass an den Verbindungsstellen 3 der Stangen 2 die Kupplungsteile mit einem elastischen Teil 5 fest montiert sind.

Als Folge davon weisen die inwendigen Kupplungsteile in den rohrförmigen Verbindungselementen 6 einen starren Teil 4 auf.

In Abhängigkeit
- vom Querschnitt der fest miteinander verbundenen Stangen 2 im rohrförmigen Leitergestell 1 und
- vom Querschnitt der rohrförmigen Verbindungselemente 6
kann sich zwischen den fest miteinander verbundenen Stangen 2 und den rohrförmigen Verbindungselementen 6 ein zusätzliches Verbindungselement 8 befinden. Dieses zusätzliche Verbindungselement 8 ist derart geformt, dass eine formschlüssige Verbindung zwischen dem Leitergestell 1 und den rohrförmigen Verbindungselementen 6 resultiert. Diese formschlüssige Verbindung kann die Form einer umgehenden Vertiefung 20 haben.

Das zusätzliche Verbindungselement 8 und das starre Kupplungsteil 4 können aus einem Stück gefertigt sein und mit dem vorgefertigten rohrförmigen Leitergestell 1 an den Verbindungsstellen 3 der fest miteinander verbundenen Stangen 2 fest montiert, insbesondere angeschweisst, sein.

Es ist auch möglich, dass an den Verbindungsstellen 3 der fest miteinander verbundenen Stangen 2 ein oder zwei Hohlkörper 9 fest montiert, insbesondere angeschweisst oder angeschraubt, sind. Diese Hohlkörper 9 haben vorzugsweise die Form eines Zylinders. An diese fest montierten Zylinder 9 sind entweder die starren Kupplungsteile 4 oder die Kupplungsteile mit einem elastischen Teil 5 fixiert. Es ist bevorzugt, dass die starren Kupplungsteile 4 an den Hohlkörper 9 fixiert sind, beispielsweise mittels eines Stiftes. Die Längsachsen der Hohlkörper 9 sind in einem Winkel von 90° zu den Längsachsen der fest miteinander verbundenen Stangen 2 angeordnet.

Bei dieser Ausführungsform weisen die starren Kupplungsteile 4 oder die Kupplungsteile mit einem elastischen Teil 5 an ihrem Ende, das dem Kupplungsteil gegenüber liegt, einen Zylinder 10 auf, der passgenau auf den Hohlkörper 9 abgestimmt ist, wobei die Fixierung zwischen dem Hohlkörper 9 und dem Zylinder 10 mittels eines Stiftes erfolgt.

Die starren Kupplungsteile 4 haben an der dem Leitergestell 1 zugewandten Seite eine zylindrische Form mit einem Durchmesser von 15,8 mm und weisen eine mittig im Zylinder 10 angeordnete durchgehende Bohrung 19 auf.

Die zylinderförmigen Hohlkörper 9 für die Aufnahme der starren Kupplungsteile 4 haben eine Länge von 5,98 mm, einen Aussendurchmesser von 20,84 mm, einen Innendurchmesser von 15,8 mm und somit eine Wandstärke von 2,52 mm.

Auf halber Länge ist in jeder Zylinderwand eine durchgehende Bohrung 19 und auf der gegenüberliegenden Seite eine halbe Bohrung für die Aufnahme und die Fixierung der Stifte vorhanden.

Bei dieser Ausführungsform sind das Leitergestell 1 in der Vertikalen und die rohrförmigen Verbindungselemente 6 in der Horizontalen angeordnet.

Es ist auch möglich, dass das Leitergestell 1 in der Horizontalen und die rohrförmigen Verbindungselemente 6 in der Vertikalen angeordnet sind.

Eine modulare, mehrfach montierbare und demontierbare Rahmenkonstruktion in der Form eines Regals mit zwei Elementen in der Länge und drei Elementen in der Höhe kann wie folgt montiert werden:
Schritt 1: Ein vorgefertigtes, rohrförmiges Leitergestell 1 für die Anordnung am Anfang einer Rahmenkonstruktion wird derart auf einer Arbeitsfläche bereitgelegt, dass die Kupplungsteile 4,5 nach oben und die bereits montierten Fussteile 17 nach links gerichtet sind.
Schritt 2: An allen acht Verbindungsstellen 3 werden die rohrförmigen Verbindungselemente 6 montiert.
Schritt 3: Ein vorgefertigtes, rohrförmiges Leitergestell 1 für die Anordnung zwischen dem Anfang und dem Ende einer Rahmenkonstruktion wird mit den nach links gerichteten Fussteilen 17 auf das nach Schritt 2 erhaltene Produkt gelegt und synchron montiert.
Schritt 4: Das nach Schritt 3 erhaltene Produkt wird senkrecht auf die Fussteile 17 gestellt.
Schritt 5: Bei dem nach Schritt 4 erhaltenen Produkt werden an allen acht Verbindungsstellen 3 die rohrförmigen Verbindungselemente 6 montiert.
Schritt 6: Ein vorgefertigtes, rohrförmiges Leitergestell 1 für die Anordnung am Ende einer Rahmenkonstruktion wird mit den nach unten gerichteten Fussteilen 17 synchron an das nach Schritt 5 erhaltene Produkt montiert.

Die jeweils gewünschten Böden, Deckel, Rückwände und Seitenwände können gemäss dem Stand der Technik montiert und demontiert werden. Ebenso kann das Zubehör, beispielsweise Schubladen, Schwenktüren oder Klapptüren, gemäss dem Stand der Technik montiert und demontiert werden.

Das so montierte Regal kann wie folgt demontiert werden:
Die Böden, Deckel, Rückwände und Seitenwände sowie das Zubehör werden entfernt.

An allen acht Stellen werden durch Einwirkung eines von aussen applizierten Stiftes durch die Öffnungen 7 in den rohrförmigen Verbindungselementen 6 und die Öffnung 12 im Insert 11 die Kupplungsteile 4,5 entriegelt und das vorgefertigte, rohrförmige Leitergestell 1 für die Anordnung am Ende einer Rahmenkonstruktion wird synchron entfernt.

Die acht rohrförmigen Verbindungselemente 6 werden durch Einwirkung eines von aussen applizierten Stiftes durch die Öffnungen 7,12 entriegelt und entfernt.

Diese Schritte werden so lange wiederholt, bis alle Teile demontiert sind.

### Liste der Bezugszeichen

In der vorliegenden Erfindung werden folgende Bezugszeichen verwendet:
- 1: Vorgefertigtes rohrförmiges Leitergestell
- 2: Stangen
- 3: Verbindungsstellen
- 4: Starre Kupplungsteile
- 5: Elastischer Teil an einem Kupplungsteil
- 6: Rohrförmige Verbindungselemente
- 7: Öffnung in der Aussenwand eines rohrförmigen Verbindungselementes 6
- 8: Zusätzliches Verbindungselement
- 9: Hohlkörper, vorzugsweise in der Form eines Zylinders
- 10: Zylinder an den Kupplungsteilen 4,5
- 11: Insert
- 12: Öffnung im Insert 11
- 13: Rippen
- 14: Hohlniete
- 15: Kerbe am starren Kupplungsteil 4
- 16: Kerbe am Kupplungsteil mit einem elastischen Teil 5
- 17: Fussteil
- 18: Abschlusskappe
- 19: Durchgehende Bohrung im Zylinder 10
- 20: umgehende Vertiefung am zusätzlichen Verbindungselement 8.

## Patentansprüche

1. Modulare, mehrfach montierbare und demontierbare Rahmenkonstruktion,
**dadurch gekennzeichnet, dass**
sie als erster Bestandteil
ein vorgefertigtes rohrförmiges Leitergestell (1) mit der jeweils gewünschten Anzahl und den jeweils gewünschten Längen von fest miteinander verbundenen Stangen (2) umfasst, wobei an den jeweils gewünschten Verbindungsstellen (3) der Stangen (2) ein oder zwei
entweder starre Kupplungsteile (4) oder Kupplungsteile mit einem elastischen Teil (5) fest montiert sind,
wobei diese Kupplungsteile (4,5) in einem Winkel von 90° zu den Längsachsen der fest miteinander verbundenen Stangen (2) angeordnet sind, und
wobei bei nur einem entweder starren Kupplungsteil (4) oder einem Kupplungsteil mit einem elastischen Teil (5) diese Kupplungsteile (4,5) auf die gleiche Seite des Leitergestells (1) gerichtet sind, und
als zweiter Bestandteil
rohrförmige Verbindungselemente (6) mit den jeweils gewünschten Längen umfasst, die an ihren beiden Enden inwendige Kupplungsteile aufweisen, die entweder mit einem elastischen Teil (5) ausgerüstet oder als starre Kupplungsteile (4) ausgebildet sind,
jedes rohrförmige Verbindungselement (6) an beiden Endbereichen in der Aussenwand je eine in einer Linie angeordnete Öffnung (7) aufweist, durch welche der elastische Teil (5) sichtbar ist, wobei die genannte Linie parallel zur Längsachse des rohrförmigen Verbindungselementes (6) verläuft, und wobei die genannte Linie und die genannte Längsachse in einer planaren Ebene liegen, und
wobei die starren Kupplungsteile (4) und die Kupplungsteile mit einem elastischen Teil (5) derart aufeinander abgestimmt sind, dass sie verriegelbar und entriegelbar sind.

2. Rahmenkonstruktion nach Anspruch 1, **dadurch gekennzeichnet, dass** die fest miteinander verbundenen Stangen (2) in einem Winkel von 90° zueinander angeordnet sind.

3. Rahmenkonstruktion nach einem der Ansprüche 1 bis 2, **dadurch gekennzeichnet, dass** sich, in Abhängigkeit
- vom Querschnitt der fest miteinander verbundenen Stangen (2) im rohrförmigen Leitergestell (1) und
- vom Querschnitt der rohrförmigen Verbindungselemente (6),
zwischen den fest miteinander verbundenen Stangen (2) und den rohrförmigen Verbindungselementen (6) ein zusätzliches Verbindungselement (8) befindet, welches derart geformt ist, dass eine formschlüssige Verbindung zwischen dem Leitergestell (1) und dem zusätzlichen Verbindungselement (8) resultiert, wobei der Querschnitt des zusätzlichen Verbindungselementes (8) dem Querschnitt des rohrförmigen Verbindungselementes (6) entspricht.

4. Rahmenkonstruktion nach Anspruch 3, **dadurch gekennzeichnet, dass** an die zusätzlichen Verbindungselemente (8) entweder die starren Kupplungsteile (4) oder die Kupplungsteile mit einem elastischen Teil (5) fest montiert, vorzugsweise angeschweisst oder angeschraubt, sind.

5. Rahmenkonstruktion nach einem der Ansprüche 1 bis 4, **dadurch gekennzeichnet, dass**
- die miteinander verbundenen Stangen (2) und
- die rohrförmigen Verbindungselemente (6)
einen runden oder einen mehreckigen, insbesondere einen quadratischen, sechseckigen oder achteckigen, Querschnitt haben.

6. Rahmenkonstruktion nach einem der Ansprüche 1 bis 5, **dadurch gekennzeichnet, dass** an den jeweils gewünschten Verbindungsstellen (3) der fest miteinander verbundenen Stangen (2) ein oder zwei Hohlkörper (9), vorzugsweise zylinderförmige Hohlkörper, fest montiert sind, an denen entweder starre Kupplungsteile (4) oder Kupplungsteile mit einem elastischen Teil (5) fixiert sind, wobei die Längsachsen der Hohlkörper (9) in einem Winkel von 90° zu den Längsachsen der fest miteinander verbundenen Stangen (2) angeordnet sind.

7. Rahmenkonstruktion nach Anspruch 6, **dadurch gekennzeichnet, dass** die starren Kupplungsteile (4) oder die Kupplungsteile mit einem elastischen Teil (5) an ihrem Ende, das dem Abschnitt des Kupplungsteils, welcher der Kupplung dient, gegenüber liegt, einen Zylinder (10) aufweisen, der passgenau auf den Hohlkörper (9), vorzugsweise ein zylinderförmiger Hohlkörper, abgestimmt ist, wobei die Fixierung zwischen dem Hohlkörper (9) und dem genannten Zylinder (10) mittels eines Stiftes erfolgt.

8. Rahmenkonstruktion nach einem der Ansprüche 6 bis 7, **dadurch gekennzeichnet, dass** der Hohlkörper (9), vorzugsweise ein zylinderförmiger Hohlkörper, und das starre Kupplungsteil (4) aus einem Stück gegossen sind und insbesondere aus einer Legierung oder aus einem Metall hergestellt sind.

9. Rahmenkonstruktion nach einem der Ansprüche 1 bis 8, **dadurch gekennzeichnet, dass** die Kupplungsteile mit einem elastischen Teil (5) in den rohrförmigen Verbindungselementen (6) als Insert (11) ausgebildet sind, das an seiner Aussenseite eine auf die Öffnung (7) im rohrförmigen Verbindungselement (6) abgestimmte Öffnung (12) aufweist, durch welche der elastische Teil (5) sichtbar ist, und das vorzugsweise entlang seiner Längsachse an seiner Aussenseite Rippen (13) aufweist.

10. Rahmenkonstruktion nach Anspruch 9, **dadurch gekennzeichnet, dass** die Inserts (11) in die rohrförmigen Verbindungselemente (6) eingepresst sind und zur besseren Fixierung gegebenenfalls noch zusätzlich verklebt sind.

11. Rahmenkonstruktion nach einem der Ansprüche 1 bis 10, **dadurch gekennzeichnet, dass** in die Öffnungen (7) in den rohrförmigen Verbindungselementen (6), durch welche das Kupplungsteil mit einem elastischen Teil (5) sichtbar ist, eine Hohlniete (14) eingepresst ist.

12. Rahmenkonstruktion nach einem der Ansprüche 1 bis 11, **dadurch gekennzeichnet, dass** die starren Kupplungsteile (4) und die Kupplungsteile mit einem elastischen Teil (5) zwecks Einrastens je eine aufeinander abgestimmte, angeschrägte Kerbe (15,16) aufweisen.

13. Rahmenkonstruktion nach einem der Ansprüche 1 bis 12, **dadurch gekennzeichnet, dass** die am Leitergestell (1) fixierten starren Kupplungsteile (4) in Richtung der dem Leitergestell (1) abgewandten Seite verjüngend verlaufen und an ihrem Ende eine angeschrägte Kerbe (15) aufweisen.

14. Rahmenkonstruktion nach einem der Ansprüche 1 bis 13, **dadurch gekennzeichnet, dass** die Kupplungsteile mit einem elastischen Teil (5) in den rohrförmigen Verbindungselementen (6) in Richtung des Rohrendes verjüngend verlaufen und an ihrem Ende eine angeschrägte Kerbe (16) aufweisen.

15. Rahmenkonstruktion nach einem der Ansprüche 1 bis 14, **dadurch gekennzeichnet, dass**
- die starren Kupplungsteile (4) als Platten, vorzugsweise als rechteckige Platten, ausgebildet sind, die mittig angeordnet eine Öffnung, insbesondere eine quadratische oder rechteckige Öffnung, aufweisen, und dass
- die Kupplungsteile mit einem elastischen Teil (5) als abgerundete oder als angeschrägte Kerben (16) oder als Stifte mit einem runden oder mehreckigen Querschnitt ausgebildet und derart angeordnet sind, dass sie in die Öffnung in den genannten Platten einrasten.

16. Rahmenkonstruktion nach einem der Ansprüche 1 bis 15, **dadurch gekennzeichnet, dass** die Öffnungen (7) in der Aussenwand der rohrförmigen Verbindungselemente (6) in montierter Form entweder nach innen oder nach unten gerichtet sind.

17. Rahmenkonstruktion nach einem der Ansprüche 1 bis 16, **dadurch gekennzeichnet, dass** das vorgefertigte rohrförmige Leitergestell (1) und die rohrförmigen Verbindungselemente (6) aus Stahl, vorzugsweise aus Chromstahl, hergestellt sind.

18. Rahmenkonstruktion nach einem der Ansprüche 9 bis 17, **dadurch gekennzeichnet, dass** die Inserts (11) aus einem Kunststoff hergestellt sind.

19. Verwendung der Rahmenkonstruktion nach einem der Ansprüche 1 bis 18 zur Herstellung von Möbeln, insbesondere von Regalen, Büchergestellen, Schränken und Kästen.
